# FASCICULE DE BREVET EUROPEEN

(11) **EP 3 016 240 B1**
(45) Date de publication et mention de la délivrance du brevet: **01.08.2018**
(21) Numéro de dépôt: 15191895.0
(22) Date de dépôt: 28.10.2015
(51) Int. Cl.: H02J 7/14

(54) **UNITÉ DE PRODUCTION ÉLECTRIQUE AUTONOME AUTORÉGULÉE FOURNISSANT UN COURANT CONTINU, ET SON UTILISATION DANS UNE BORNE AUTONOME D'ALIMENTATION ÉLECTRIQUE D'UNE ANTENNE-RELAIS**
AUTONOME ELEKTRISCHE ENERGIEERZEUGUNGSEINHEIT UND IHRE ANWENDUNG FÜR EINE ANTENNE
AUTONOMOUS ELECTRICAL PRODUCTION UNIT AUTOREGULATED AND ITS UTILISATION FOR A RELAIS ANTENNA

(30) Priorité: 31.10.2014 FR 1402471
(43) Date de publication de la demande: 04.05.2016
(73) Titulaire: Armoudian, Sarkis, 01120 Thil (FR); Le Floch, Cyrille, 49350 Les Rosiers sur Loire (FR)
(72) Inventeur: Armoudian, Sarkis, 01120 Thil (FR); Le Floch, Cyrille, 49350 Les Rosiers sur Loire (FR)
(74) Mandataire: Schmidt, Martin Peter

(56) Documents cités:
- EP-A2- 2 746 092
- US-A- 4 402 288
- US-A- 5 198 698

## Description

### Domaine de l'invention

La présente invention appartient au domaine des dispositifs de production d'énergie électrique sous la forme d'un courant continu. Plus particulièrement elle concerne une unité de production électrique autonome autorégulée pour fournir un courant continu à un dispositif consommateur, notamment pour charger des batteries.

### État de la technique

L'alimentation électrique d'une antenne-relais de téléphonie mobile non connectée à un réseau électrique, comme par exemple les antennes-relais placées dans des zones isolées, ou dans des pays dans lesquels le réseau électrique n'est pas très développé, se fait habituellement grâce à un système comprenant un groupe électrogène dont le moteur est alimenté par du carburant stocké dans une cuve, un module électronique, des batteries électrique de stockage alimentées par le groupe électrogène moyennant une régulation du régime du moteur par le module électronique, ces batteries étant généralement des batteries au plomb, et éventuellement des panneaux photovoltaïques et/ou des éoliennes fournissant un complément d'apport d'énergie électrique. Typiquement l'antenne-relais est alimenté en courant continu sous une tension de 48V ; sa consommation électrique est assez constante.

Ce type de système de production d'électricité pour la charge des batteries, régulé par un module électronique, est soumis à un risque non négligeable de panne, qui n'est pas acceptable dès lors que le système est utilisé en zone isolée.

De nombreux dispositifs de type groupe électrogène pour la charge de batteries ont été proposés dans l'état de la technique.

Le brevet FR 1 300 302 a pour objet un dispositif pour la charge de batteries. La conversion alternatif-continu se fait par un pont de diodes.

Le certificat d'utilité FR 2 127 546 décrit une installation électrique pour véhicule automobile comprenant générateur à courant alternatif, qui alimente, par l'intermédiaire d'un montage de diode et d'un commutateur, une batterie d'accumulateurs, ainsi que différents organes utilisateurs électriques, cette installation électrique ayant comme caractéristique que les deux canalisations de raccordement du générateur de courant alternatif sont raccordées chacune à deux diodes montées en anti-parallèle, dont deux diodes placées dans une direction de passage sont reliées à la masse, et deux diodes placées dans l'autre direction de passage sont reliées chacune à un contact du commutateur, de sorte que, dans une position de connexion une seule des diodes est reliée à la batterie d'accumulateurs, tandis que, dans l'autre position de connexion, les deux diodes sont reliées à la batterie et aux organes utilisateurs de courant.

Le brevet US 7,948,218 décrit un régulateur de tension relié à un alternateur à aimant permanent ayant des enroulements de phase avec une connexion configurable, et destiné à alimenter en courant continu une batterie. Le régulateur comprend une pluralité de redresseurs « demi-ponts » connectés entre l'alternateur et la batterie.

Tous ces systèmes nécessitent la présence d'un moyen de régulation du courant de charge des batteries afin d'éviter la dégradation des batteries par un courant de charge excessif. Ce moyen de régulation est généralement un module électronique dont la fiabilité peut être mise à défaut si elle est utilisée dans des conditions très contraignantes (désert, froid, climat humide, variations de température et/ou d'humidité, etc). Dans ces systèmes, le moteur à combustion peut être régulé au niveau de sa pompe d'injection de carburant, ce qui nécessite d'autres systèmes électroniques complexes et potentiellement sujets à des pannes.

Il existe donc un besoin pour un dispositif générateur d'électricité pour la charge régulée de batteries électriques pourvu d'un système de régulation aussi simple et fiable que possible, en vue de son utilisation dans une borne d'alimentation d'une antenne-relais implantée en site isolé ; en particulier il serait souhaitable qu'un tel système ne comporte pas de composants électroniques complexes ou fragiles.

### Objet de l'invention

La demanderesse a trouvé qu'il est possible de concevoir un dispositif autonome pour la charge régulée de batteries qui est dépourvu de moyens spécifiques, électroniques ou électrotechniques, de régulation : ce système s'autorégule d'une manière tout à fait satisfaisante et fiable.

Ce dispositif permet de sécuriser le chargement régulé d'une batterie par le courant électrique fourni par un alternateur mû par un moteur, de manière à ne pas dépasser un courant maximum, tout en évitant de faire caler le moteur en ne dépassant pas son couple maximal.

Ainsi le premier objet de l'invention est un système ou dispositif autonome pour fournir un courant continu à un consommateur, et notamment pour fournir un courant continu pour la charge régulée d'au moins une batterie, ledit système ou dispositif comprenant un moteur à combustion alimenté par un combustible, un alternateur et un moyen redresseur de courant apte à produire un courant continu, caractérisé en ce que :
- ledit alternateur est un alternateur synchrone fonctionnant en fréquence variable,
- ledit moteur à combustion est accouplé audit alternateur,
- ledit moyen redresseur de courant est placé en sortie dudit alternateur et à l'entrée dudit consommateur, qui peut être une batterie,
- ledit moteur à combustion et ledit alternateur sont configurés et/ou réglés pour fournir une puissance telle que le courant continu issu dudit moyen redresseur ne dépasse pas une valeur prédéterminée (en fonction de la capacité des batteries)
- et caractérisé en ce que dans ledit système ou dispositif la vitesse du moteur est modulée par l'intermédiaire de la fréquence de l'alternateur, cette dernière étant modulée par le courant continu appelé par ledit consommateur.

Plus précisément, il s'agit d'un système ou dispositif autonome pour fournir un courant continu à un consommateur, et notamment pour fournir un courant continu (volontairement limité à une valeur à ne pas dépasser) pour la charge régulée d'au moins une batterie, ledit système ou dispositif comprenant un moteur à combustion alimenté par un combustible, un alternateur et un moyen redresseur de courant apte à produire un courant continu, caractérisé en ce que :
- ledit alternateur est un alternateur synchrone fonctionnant en fréquence variable,
- ledit alternateur est accouplé audit moteur à combustion,
- ledit moyen redresseur de courant est placé en sortie dudit alternateur et à l'entrée dudit consommateur, qui peut être une batterie,
- ledit moteur à combustion et ledit alternateur sont dimensionnés pour fournir une puissance telle que le courant continu issu dudit moyen redresseur ne dépasse pas une valeur prédéterminée (en fonction de la capacité des batteries et du courant appelé par les autres charges),
et caractérisé en ce que dans ledit système ou dispositif l'intensité du courant continu appelé par le consommateur est fonction de la fréquence de l'alternateur, ladite fréquence impactant directement le couple du moteur et donc mécaniquement la vitesse du moteur.
Tout appel de courant approchant la valeur maximale à ne pas dépasser (pour ne pas endommager les équipements (batteries notamment)) augmente la fréquence de l'alternateur et par conséquent le couple demandé au moteur.
De ce fait, à l'approche du couple maximum le moteur 2 ralentit (i.e. sa vitesse diminue), la fréquence de l'alternateur 3 diminue et le courant de sortie décroit ; le couple moteur est alors plus important et si la charge augmente, le courant de sortie augmente.

Le système selon l'invention présente une autorégulation. En particulier, le moteur ne reçoit aucun signal de pilotage ni de contrôle externe qui puisse agir sur son alimentation en carburant ou sa vitesse de rotation, sauf éventuellement pour le démarrage par un moyen de démarrage tel qu'un démarreur électrique.

Le moteur à combustion peut être un moteur à combustion interne, et de préférence un moteur diesel. Il fonctionne avantageusement en mode vitesse variable ; cela favorise l'autorégulation du système et permet au moteur de tourner à régime bas lorsque le courant appelé par le consommateur est faible.

Dans un mode de réalisation avantageux de l'invention, ledit alternateur est un alternateur triphasé à aimants permanents au rotor (qui peut être bi ou multipolaire).

Ledit moyen redresseur de courant peut être un pont de diodes ; un tel moyen redresseur fournit un courant continu de qualité appropriée pour recharger des batteries.

Dans encore un autre mode de réalisation, un commutateur de transfert automatique à deux sorties est placé entre l'alternateur et le pont de diodes. Ce commutateur peut être commandé par un dispositif de commande spécifique.

Dans encore un autre mode de réalisation, le courant continu est produit sous une tension de 58V en charge et 52V en entretien (appelé couramment « floating »). Cela convient aux batteries au plomb d'une tension nominale de 48 V.

Dans un mode de réalisation avantageux ledit consommateur est représenté par une batterie mise en parallèle avec un système électronique de réception et/ou d'émission d'ondes radioélectriques, tel qu'une antenne-relais.

Le moteur à combustion dudit système ou dispositif autonome est avantageusement dimensionné pour fournir une puissance telle que le courant continu issu dudit moyen redresseur ne dépasse pas une valeur prédéterminée qui est inférieure ou égale à la valeur maximale du courant de charge de la batterie plus le courant continu absorbé par d'éventuels autres consommateurs mis en parallèle avec la batterie. Cette mesure constructive protège la batterie et améliore sa durée de vie.

Un autre objet de la présente invention est un système ou dispositif pour la charge régulée de batteries, comprenant un dispositif autonome selon l'invention, et au moins une batterie, caractérisé en ce que le moteur à combustion dudit dispositif autonome est configuré et réglé pour fournir une puissance telle que le courant continu issu dudit moyen redresseur ne dépasse pas une valeur prédéterminée qui est inférieure ou égale à la valeur maximale du courant de charge de la batterie plus le courant continu absorbé par d'éventuels autres consommateurs mis en parallèle avec la batterie.

Ce système ou dispositif peut comprendre un ou plusieurs panneaux photovoltaïques ; ils contribuent au courant direct produit par le système qui permet de charger les batteries et/ou alimenter un autre consommateur, tel qu'un équipement de télécom.

Un autre objet de l'invention est l'utilisation d'un système ou dispositif selon l'invention pour alimenter une antenne-relais de téléphonie mobile.

### Description des figures

Les figures 1 à 4 illustrent certains aspects de l'invention. La figure 1 est un schéma de principe du système (appelé aussi « dispositif ») autonome de production d'électricité selon l'invention.
La figure 2 est un schéma de principe de la borne autonome d'alimentation selon l'invention.
La figure 3 montre des paramètres électriques mesurés en relation avec l'exemple 1 selon l'invention : la puissance délivrée par le moteur, l'intensité du courant absorbé par la charge et la fréquence de l'alternateur. Elle fait apparaitre le comportement du système lorsque l'on atteint la puissance maximale délivrable.
La figure 4 monte des mesures du courant en sortie (en Ampère) du pont de diodes en fonction du temps (en secondes) après un démarrage du moteur à t=0. Ces mesures ont été réalisées sur le système décrit dans l'exemple 1 ci-dessous.

### Liste des repères numériques utilisés sur les figures :

- 1: Dispositif (système) de production de courant continu selon l'invention
- 2: Moteur à combustion
- 3: Alternateur
- 4: Commutateur de transfert automatique
- 5: Pont de diodes
- 6: Batteries
- 7: Dispositif de commande du commutateur de transfert automatique
- 8: Equipement télécom électronique pour gérer et assurer l'émission et ou réception d'une antenne-relais
- 9: Borne autonome d'alimentation selon l'invention
- 10: Cuve de carburant
- 11: Panneau photovoltaïque

### Description de l'invention

La présente invention a pour objet un système ou dispositif de production de courant continu **1** destiné notamment à la charge des batteries **6** électriques d'une borne d'alimentation électrique autonome **9** d'un équipement télécom électronique **8** permettant de gérer et assurer l'émission et / ou la réception d'une antenne-relais de téléphonie mobile (cet équipement étant appelé par la suite simplement « antenne-relais ») capable d'être implantée en site isolé, c'est-à-dire dans les zones ne bénéficiant pas de réseau électrique. Le terme « autonome » est compris ici dans ce sens d'absence de raccordement à réseau électrique externe.

Typiquement les antennes-relais **8** de téléphonie mobile sont alimentées en courant continu par des batteries **2** sous une tension nominale qui est typiquement de 48V ; la borne autonome d'alimentation **9** selon l'invention est capable de le faire. En règle générale, et d'autant plus que le lieu d'implantation est situé dans des pays en voie de développement et/ou dans des zones rurales ou désertiques, on souhaite minimiser l'intervention humaine sur une telle borne **9,** qu'il s'agisse du remplissage de la cuve de carburant **10,** de la maintenance du système de production de courant continu **1** (et notamment de son moteur à combustion **2** et de ses batteries **8**) ou de son dépannage. Pour cela, il convient de minimiser la consommation en carburant, de maximiser la durée de vie des batteries **8,** de simplifier au mieux le système de régulation du système de production de courant continu **1** et d'éviter l'utilisation de composant électroniques nombreux, complexes et/ou sensibles à la chaleur et à la poussière.

Des systèmes d'alimentation électrique d'antennes-relais utilisant les énergies renouvelables existent déjà. Certaines de ces bornes peuvent être équipées de panneaux solaires photovoltaïques. Des systèmes de ce type ont été développées par exemple par la société Tenesol. Ces bornes fonctionnent exclusivement avec l'énergie photovoltaïque et elles nécessitent par conséquent des surfaces de panneaux solaires considérables et des batteries en grande quantité.

Il existe également des systèmes d'alimentation électrique d'antenne-relais de télécommunication qui utilisent plusieurs sources d'énergie, en particulier des panneaux photovoltaïques et un groupe électrogène. De telles bornes sont décrites par exemple dans les brevets ou demandes de brevet GB 2 076 036, US 6,058,299, US 7,230,819 et ES 2 380 848.

Dans le cadre de la présente invention les inventeurs ont développé un nouveau système ou dispositif autonome **1** pour fournir un courant continu à un consommateur **6,** qui convient particulièrement pour la charge et recharge de batteries, et qui convient plus particulièrement pour être intégré dans une borne d'alimentation électrique autonome **9** d'une antenne-relais **8.** Cependant, le système autonome selon l'invention peut être utilisé dans d'autres applications.

Les inventeurs se sont rendu compte que pour améliorer la fiabilité globale d'une telle borne d'alimentation électrique autonome **9,** il fallait simplifier le système de régulation du système d'alimentation électrique. En particulier, le dispositif de charge des batteries doit être robuste et nécessiter peu d'entretien. Selon l'invention, pour améliorer la robustesse, on a choisi de diminuer le nombre de composants électroniques.

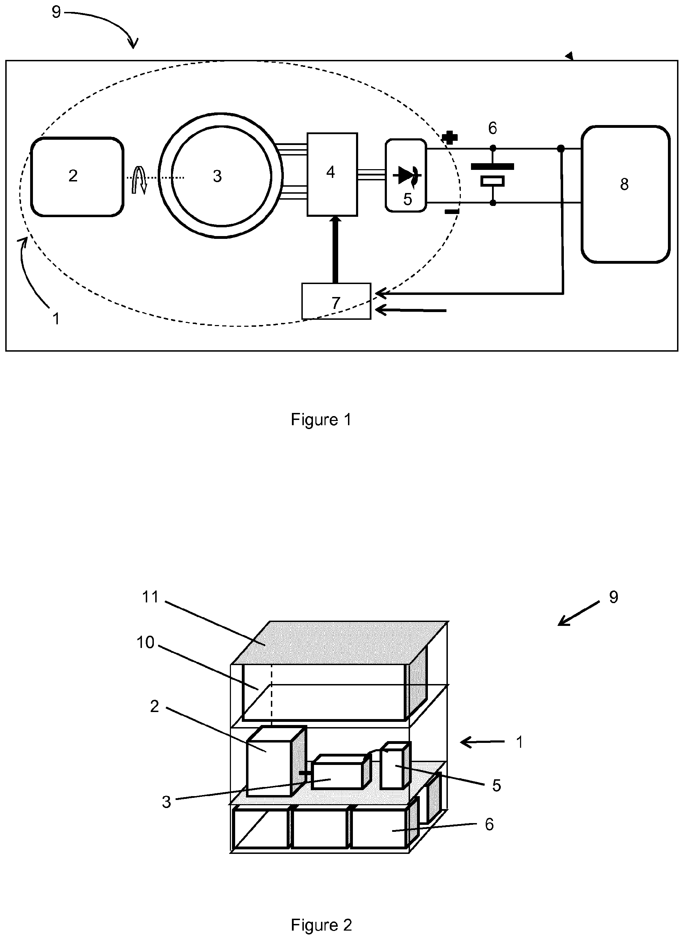

En référence à la figure 1, le système ou dispositif autonome **1** pour fournir un courant continu à un consommateur **6** de courant direct comprend un moteur à combustion **2** alimenté par un combustible, un alternateur **3** et un moyen redresseur de courant **5** apte à produire un courant continu. Selon un aspect essentiel de l'invention, ledit alternateur **3** est un alternateur synchrone fonctionnant en fréquence variable. Ledit moteur à combustion **2** est accouplé audit alternateur **3,** et ledit moyen redresseur de courant **5** est placé en sortie dudit alternateur **3** et à l'entrée dudit consommateur **6** du courant direct. Ledit moteur à combustion **2** et ledit alternateur **3** sont dimensionnés pour fournir une puissance telle que le courant continu issu dudit moyen redresseur **5** ne dépasse pas une valeur prédéterminée. Selon un autre aspect essentiel de l'invention, la vitesse du moteur **2** est modulée par l'intermédiaire de la fréquence de l'alternateur **3,** cette dernière étant modulée par le courant continu appelé par ledit consommateur **6.**

Les inventeurs ont constaté que l'association d'un moteur **2** à vitesse variable et d'un alternateur **3** à fréquence variable et de courant de sortie variable permet de réguler le courant de sortie en fonction de la puissance de la charge. Plus précisément, plus la charge (i.e. le courant appelé par le consommateur **6**) est élevée, plus la vitesse et la fréquence de l'alternateur **3** sont élevées, et plus le couple demandé au moteur **2** est important. Tant que la puissance demandée par le consommateur est inférieure à la puissance maximum que peut fournir le moteur, ce dernier monte en couple jusqu'à atteindre la puissance maximum qu'il peut fournir. Lorsque le moteur sort de sa plage de fonctionnement optimum (notamment lorsque la puissance demandée par le consommateur dépasse la puissance maximum que peut fournir le moteur), le moteur commence à ralentir, et par voie de conséquence la fréquence de l'alternateur diminue, et la puissance fournie par le binôme « moteur + alternateur » (les deux étant en liaison mécanique directe) au consommateur diminue également. Dans le système selon l'invention la puissance absorbée par les équipements télécom est quasiment constante et reste prioritaire au détriment de la puissance absorbée par les batteries. De ce fait à l'approche du couple maximum, le moteur **2** ralentit (i.e. sa vitesse diminue), la fréquence de l'alternateur **3** diminue et le courant de sortie décroit.

La puissance à fournir par le binôme « moteur + alternateur » va alors diminuer, ce qui permet au moteur de revenir dans sa plage de fonctionnement optimum et de pouvoir à nouveau augmenter son couple et fournir plus de puissance.

Ce cycle se reproduit plusieurs fois jusqu'à ce qu'un équilibre s'installe entre la puissance totale absorbée par le consommateur (représenté typiquement par les équipements de télécommunication et les batteries) et la capacité du binôme « moteur + alternateur » à produire de l'énergie électrique.

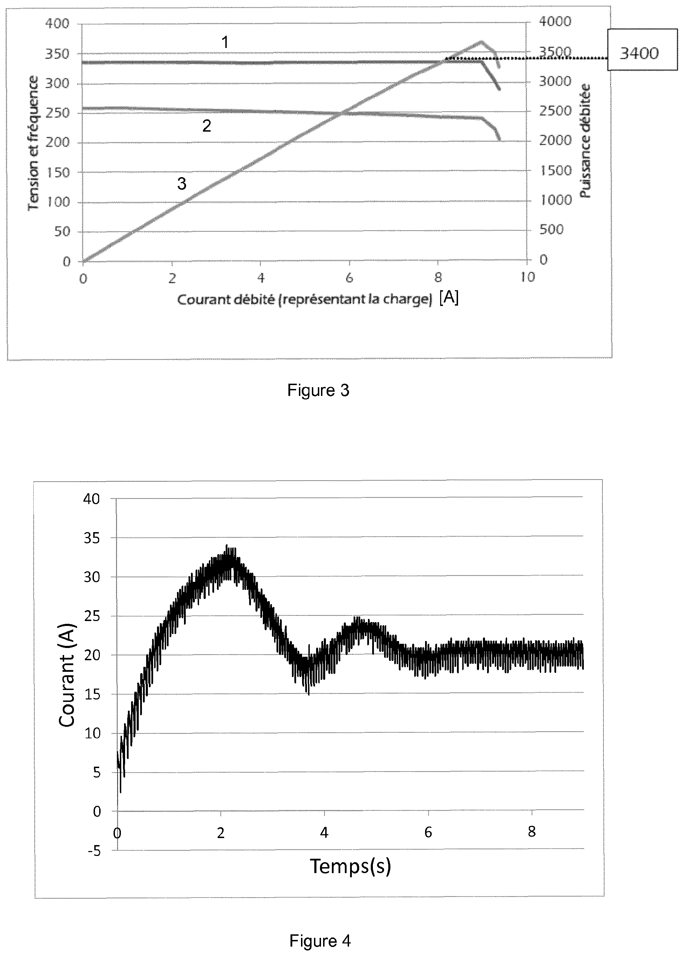

Cet équilibre est atteint au bout de quelques secondes. Cela est illustré sur la figure 4 qui représente l'évolution du courant de sortie mesuré au niveau du pont de diodes en fonction du temps, après le démarrage du moteur à t=0. On observe entre t=0 et t= 2 secondes une phase de montée en puissance, suivi de 2 à 6 secondes d'une phase d'auto-régulation, qui se poursuit ensuite en équilibre stabilisé. Cela illustre l'autorégulation du système **1** selon l'invention.

Ainsi le système **1** s'autorégule par le courant appelé par le consommateur **6.** Le dimensionnement (appelé aussi « la calibration ») de la puissance du moteur **2** et de la plage de fréquence de l'alternateur **3** permet d'obtenir un système autorégulé. En particulier cela permet de limiter le courant de sortie (courant direct) produit par le système **1** selon l'invention à une valeur prédéterminée par le dimensionnement de la puissance du moteur **2** et de la plage de fréquence de l'alternateur **3.** En pratique la limitation du courant de sortie est importante car elle évite l'endommagement du consommateur **6** par l'alimentation avec un courant trop élevé. A titre d'exemple, une batterie **6** risque d'être détruite si elle absorbe un courant trop élevé.

Comme indiqué ci-dessus, ledit consommateur **6** peut être une batterie ou une pluralité de batteries. Il est alimenté en courant direct par le système autonome **1,** et en même temps il coopère avec ce système **1** dans la mesure où le courant appelé par le consommateur **6** contribue à la régulation de ce système. Si ledit consommateur est une batterie **6** c'est elle qui alimente en courant direct un consommateur final, conformément à la destination de la borne d'alimentation autonome **9** formée par le système **1** selon l'invention et le consommateur final. Ce consommateur final peut être une antenne-relais **2** de téléphonie mobile ; ces antennes-relais sont typiquement alimentées en courant direct sous une tension de 48 V. Si le consommateur **6** n'est pas une batterie, il peut être formé directement par le consommateur final. Cependant on préfère que le consommateur soit une batterie **2** ou comprenne une batterie **2,** car cela facilite l'ajout de sources d'énergies renouvelables, tel qu'au moins un panneau photovoltaïque **11,** à la borne **9.** Dans un mode de réalisation avantageux le consommateur est l'équipement télécom de l'antenne-relais **2** qui appelle un courant sensiblement constant, et la batterie **6,** montée en parallèle par rapport à l'équipement télécom de l'antenne relais **2,** dont le besoin en courant de charge est variable. D'une manière générale, la durée de vie et le nombre de cycles charge / décharge que peut supporter une batterie **6** dépend entre autres de la manière dont elle est rechargée. Cet aspect de l'invention est expliqué dans ce qui suit en relation avec des batteries au plomb, qui sont encore très largement utilisées comme batterie de démarrage d'automobiles et dans des installations stationnaires, telles que les bornes autonomes d'alimentation **9** d'antennes-relais. Les batteries au plomb comprennent une pluralité de cellules élémentaires d'une tension nominale d'environ 2 V, et chaque batterie unitaire présente typiquement une tension nominale de 12 V, 24 ou 48 V, sachant que la tension nominale d'alimentation d'équipement télécom d'une antenne-relais est typiquement de 48 V.

Classiquement, le processus de charge d'une batterie comporte différentes phases, et en particulier une phase dite « de recharge » et une phase dite d'entretien (appelée plus communément phase « de floating »). La tension de recharge correspond à la tension maximum à laquelle on peut charger la batterie, la tension d'entretien (tension de floating) est la tension à laquelle on peut maintenir en permanence la charge de la batterie. La tension de recharge est supérieure à la tension d'entretien. Par conséquent, la tension appliquée aux batteries doit être augmentée pendant la phase de recharge, ce qui implique que les tensions de sortie de l'alternateur **3** doivent elles aussi être augmentées. Dans un mode de réalisation avantageux de l'invention, l'alternateur **3** est donc un alternateur à double sortie.

Dans le cas de l'alimentation en 48V continu qui convient notamment pour alimenter une antenne-relais **8,** l'une des sorties de l'alternateur est de 3x45V (utilisé en mode recharge) et l'autre sortie est de 3x40V (utilisé en mode floating).

Selon un aspect essentiel de la présente invention, le système ou dispositif de production de courant continu **1** comprend un groupe électrogène comportant un moteur thermique **2** (de préférence un moteur diesel) accouplé (de préférence directement) à un alternateur **3.** « Directement » veut dire ici que l'on n'utilise ni boîte de vitesse ni réducteur de vitesse : cela simplifie la construction et diminue les pertes de rendement par frottement.

Selon l'invention, l'alternateur **3** est de préférence un alternateur synchrone triphasé à aimants permanents au rotor qui peut être bi ou multipolaire.

Dans un mode de réalisation, si le consommateur **6** est une batterie au plomb avec une tension nominale de 48 V, l'alternateur **3** est un alternateur triphasé fournissant trois tensions d'environ 45 V au point nominal.

Avantageusement, au cours de la charge des batteries **6,** la vitesse du moteur reste à peu près constante et à une valeur choisie pour optimiser le rendement énergétique du moteur et/ou minimiser la consommation de carburant, sans être contrainte par la fréquence des tensions fournies.

Comme indiqué ci-dessus, selon un aspect essentiel de l'invention, le moteur à combustion **2** est configuré et/ou réglé pour fournir une puissance telle que le courant continu issu du moyen redresseur **5** ne dépasse pas une valeur prédéterminée. Si le consommateur **6** est une batterie, cette valeur prédéterminée de courant est inférieure ou égale au courant maximal de charge de la batterie **6,** afin de ne pas dégrader la durée de vie de la batterie **6.**

Avantageusement, les courants alternatifs issus de l'alternateur **3** sont convertis en courant continu par un pont de diodes **5.** L'intérêt de l'utilisation d'un pont de diodes **5** pour la conversion du courant alternatif en courant continu réside dans le fait que ce moyen redresseur est particulièrement robuste et fiable ; il est également peu coûteux. Ainsi, le dispositif autonome de production de courant continu **1** selon l'invention ne comprend pas de convertisseur électronique.

Les sorties de l'alternateur **3** sont de préférence reliées à un commutateur de transfert automatique **4** (appelé communément « ATS » (Automatic Transfer Switch)) permettant de passer automatiquement de l'une des sorties à l'autre en fonction de la sortie désirée. Il est commandé par un dispositif de commande **7** spécifique.

Dans un autre mode de réalisation, non préféré, l'alternateur **3** est un alternateur dit « standard », c'est-à-dire fournissant une tension nominale de 230V en 50Hz ou 60 Hz. Un autotransformateur, dit « abaisseur » est associé à l'alternateur et transforme la tension de 230V en 45V. De préférence on choisit un autotransformateur dont le rendement est élevé. Ce mode de réalisation a pour principal avantage d'abaisser le coût de fabrication du dispositif autonome **1** de charge des batteries **6.** Dans ce mode de réalisation, l'alternateur a une seule sortie, l'autotransformateur a deux sorties, l'une des sorties étant de 3x45V (utilisée en mode recharge) et l'autre sortie étant de 3x40V (utilisée en mode floating), l'ATS n'est pas nécessaire.

D'une manière générale, dans le système selon l'invention le régime transitoire à la commutation n'est pas contraignant compte tenu du débit sur batterie **6** : il ne conduit pas à une interruption de l'alimentation électrique fourni au consommateur final (tel que l'antenne-relais **2**). Le dispositif selon l'invention est ainsi dépourvu de système de régulation du courant de charge. En effet, les inventeurs ont constaté qu'il y a sensiblement une autorégulation de la production d'électricité par le système selon l'invention, la vitesse du moteur diminuant en cas de surcharge en courant.

L'autorégulation du système de production autonome **1** de courant continu selon l'invention est caractérisée par le fait que le moteur **2** ne reçoit aucun signal de commande externe qui agit sur son alimentation en carburant ou sa vitesse de rotation. C'est l'alternateur lui-même qui adapte sa résistance électromagnétique au courant de charge: lorsque la charge appelée par le consommateur augmente, la résistance électromagnétique de l'alternateur augmente et le moteur **2,** qui est couplé directement au rotor de l'alternateur **3,** peut maintenir sa vitesse en augmentant son couple dans la limite de son couple maximum. L'autorégulation du système peut s'expliquer de la manière suivante : lors d'un appel de courant de charge très élevé par les batteries **6,** la vitesse du moteur **2** diminue. Les fréquences induites en sortie de l'alternateur **3,** qui sont proportionnelles à la vitesse de rotation, diminuent donc également, ce qui tend à limiter le courant de charge, mais cela ne présente pas d'inconvénient puisque le dispositif est destiné à produire du courant continu, et que quelles que soient les fréquences, les tensions alternatives sont redressées par le pont de diodes **5.** Cette limitation du courant de charge tend à augmenter la fréquence de l'alternateur, car sa résistance électromagnétique diminue lorsque sa vitesse de rotation diminue.

De la même façon, dans le cas où les batteries **6** sont complètement déchargées, elles sont connectées à l'alternateur **3** avant le démarrage du moteur de façon à assurer une montée progressive du courant de charge lorsque le moteur **2** est en phase de montée en vitesse, sans surintensité excessive. En effet, les fréquences en sortie d'alternateur **3** augmentent en même temps que la vitesse de rotation du moteur **2.**

Selon un mode de réalisation avantageux qui convient notamment pour un système ou dispositif **1** d'alimentation autonome en courant continu d'une borne d'alimentation **9** autonome d'une antenne-relais **8** de téléphonie mobile fonctionnant sous une tension nominale de 48 V, le système **1** selon l'invention comprend un alternateur **3** conçu pour fonctionner à une fréquence comprise entre 50 Hz à 800 Hz et un moteur à combustion **2** d'une puissance comprise entre 2 kW et 5 kW. Ainsi on obtient un courant de sortie limité à 60 A pour une tension de 480 V alternatif.

Comme cela a déjà été indiqué, le système ou dispositif autonome **1** pour fournir un courant continu à un consommateur **6** peut être intégré dans une borne autonome **9** d'alimentation électrique d'une antenne-relais **8,** dans laquelle il fournit du courant continu aux consommateurs, c'est-à-dire à la batterie **6** et à l'antenne-relais **8** qui sont montés en parallèle. Si la batterie **6** est chargée, c'est elle qui alimente en courant continue l'antenne-relais **8** et le moteur **2** s'éteint. Si la batterie **6** est déchargée, le moteur **2** démarre automatiquement et charge la batterie **6** tout en fournissant du courant au à l'antenne-relais **8.**

On note que la figure 1 ne montre aucun signal de commande qui agit sur le moteur **2.** Seul un élément de commande pour déclencher le démarrage du moteur **2** (non montré sur la figure) est prévu. Le moteur **2** peut comprendre une batterie de démarrage séparée, qui alimente un démarreur électrique. Le système est avantageusement configuré de manière à ce que le démarrage soit déclenché par le dépassement vers le bas d'une valeur seuil de tension de la batterie (dans l'exemple d'une antenne-relais alimenté à une tension nominale de 48 V cette valeur seuil est avantageusement comprise entre 44V et 46 V).

En référence à la figure 2, la borne d'alimentation électrique **9** selon l'invention comprend un groupe électrogène comprenant un moteur à combustion **2,** une cuve de carburant **10** pour l'alimentation dudit moteur **2,** au moins un panneau solaire photovoltaïque **11,** et au moins une batterie **6** de stockage de l'électricité, capable d'alimenter un dispositif consommateur final d'énergie électrique, tel qu'une antenne-relais **8.** Le moteur à combustion **2** est de préférence un moteur à combustion interne, notamment un moteur diesel de petite taille, d'une puissance typiquement comprise entre 2 et 5 kW et qui consomme typiquement de l'ordre de 0,8 L à 1,6 L (de préférence entre 1,1 L et 1,3 L) 1,2 L de gazole par heure. Le courant délivré par la batterie **6** a de préférence une tension nominale d'environ 48V.

Comme montré sur la figure 2 de manière schématique, avantageusement la borne présente un empilement de trois (et de préférence de quatre niveaux), que nous décrivons ici d'en bas vers le haut: en bas de l'empilement se situe le niveau des batteries **6,** puis le niveau du système autonome **1** pour fournir un courant continu auxdites batteries **6** (avec son moteur **2** relié à l'alternateur **3** et le moyen redresseur **5** relié audit alternateur **2**), puis le niveau de la cuve de carburant **10.** Le quatrième niveau, facultatif mais très avantageux, est représenté par au moins un panneau photovoltaïque **11** ; ce dernier peut former le toit de la borne, et il peut être incliné et/ou orientable. Cependant, la figure 2 ne montre qu'un mode de réalisation particulier, et d'autres dispositions des différents composants sont possibles dans le cadre de la présente invention. Par ailleurs, la borne peut avoir n'importe quelle forme appropriée, notamment cylindrique, à section rectangulaire ou circulaire ou autre, à section constante ou non en fonction de sa hauteur, etc. Sa hauteur totale est typiquement comprise entre 2 m et 4 m, en particulier entre 2,5 m et 3,5 m.

En ce qui concerne le rôle des panneaux photovoltaïques **11,** compte-tenu de la taille relativement faible de la borne d'alimentation, cette taille étant choisie de manière à faciliter son transport et son installation sur site, la surface des panneaux photovoltaïques est modeste (environ 7 à 10 m²). Par conséquent, l'énergie qu'ils peuvent fournir correspond typiquement à environ 30% de la consommation journalière d'une antenne-relais d'une puissance de 1200 W. Ceci permet une économie appréciable de carburant. En particulier, la borne **1** peut être dimensionnée de manière à ce que le fonctionnement du moteur à combustion **2** soit limité à une durée de 7 à 9 heures par jour. Cela implique donc l'arrêt du moteur pendant au moins une partie du temps où les panneaux photovoltaïques fournissent du courant. Le système autonome **1** selon l'invention est autorégulé de manière à ce que l'appel d'un courant de charge significatif par le consommateur **6** déclenche automatiquement le démarrage du moteur à combustion. A cette fin le moteur **2** comprend un démarreur électrique ; ce dernier peut être relié à une batterie de démarrage dédiée (non représentée sur les figures), rechargé par un alternateur traditionnel, comme c'est bien connu du domaine moteurs à combustion, ou il peut être relié à la batterie **6** du système **1.**

L'apport d'énergie d'origine photovoltaïque à l'alimentation de la batterie **6** ne nécessite pas de régulation spécifique du système **1** selon l'invention. Avantageusement le panneau solaire photovoltaïque **11** est monté en parallèle par rapport à la batterie.

La borne d'alimentation électrique **9** selon l'invention est de préférence protégée contre le vol de carburant et le vol ou la dégradation des panneaux solaires **11** grâce au positionnement adéquat des différents composants. La cuve de carburant **10** est par exemple placée à l'intérieur de la borne **9** et conçue pour être invisible de l'extérieur, et les panneaux solaires **11** sont eux aussi intégrés à la borne **1,** et positionnés dans sa partie supérieure.

Dans un mode de réalisation, la borne **1** est avantageusement également protégée contre la fraude lors de la livraison de gazole grâce à des contrôles électroniques de la jauge, éventuellement associé à un moyen d'enregistrement des données mesurées.

Un système central de supervision et de communication à distance peut être prévu pour la gestion de la borne d'alimentation **9,** ce système permettant le contrôle du bon fonctionnement de tous les composants, la gestion de l'approvisionnement en carburant et le déclenchement d'opérations de maintenance courante automatisées, telles que la vidange et le remplacement périodique des filtres à huile du moteur **2** par exemple.

Dans un mode de réalisation, la borne comprend des moyens permettant une consultation périodique à distance des services météorologiques pour de déclencher le démarrage anticipé ou retardé du groupe électrogène en fonction de l'ensoleillement prévu et/ou constaté, dans le but en particulier d'optimiser les cycles de charge-décharge des batteries **6,** de réduire le plus possible la consommation de carburant, et d'augmenter la durée de vie des batteries **6.** Avantageusement, la consultation périodique à distance des services météorologiques se fait à cadence variable selon l'état de charge des batteries **6.**

La borne représente un boitier fermé ; il possède de moyens de ventilation, naturelle et/ou forcée, appropriés pour dégager la chaleur produite par le moteur à combustion et pour éviter un échauffement trop élevé des batteries.

### Exemples

### Exemple 1 :

Un prototype de système autonome pour la charge de batteries selon l'invention a été testé en banc d'essais pour une antenne-relais de 900 à 1500W (une valeur typique est de 1200 W).

Le dispositif comprenait :
- Un groupe électrogène comprenant :
   ∘ un moteur diesel monocylindre de 3,6kW
   ∘ un alternateur synchrone triphasé à aimants fournissant entre 250 à 400V, opérant à une fréquence de 300 à 500Hz, fournissant jusqu'à 3,4kVA à environ 2500 à 3000tr/mn
   ∘ une batterie de démarrage pour le moteur diesel (12V - 55Ah),
   ∘ un chargeur pour la batterie de démarrage 12V,
   ∘ une sécurité thermique interne avec arrêt du moteur.
- Un autotransformateur triphasé à double sortie 45V∼ et 40V∼ (courant de sortie jusqu'à 80A),
- Un commutateur ATS type ATyS M8 à deux voies triphasées 3x400V-60A et à commande automatisée,
- Un pont de diodes triphasé en module MTK 110A sur dissipateur, la tension de sortie du pont de diodes étant de 58V en mode recharge et 52V en mode floating,
- Quatre batteries au plomb PG 12V-220Ah, mises en série,
- Une charge de 55 A qui simule l'équipement télécom à consommation en courant continu constante.

On a constaté que l'autorégulation du système fonctionne bien. Il permet de charger les batteries correctement, le courant de charge (et donc la vitesse du moteur) est constante. On observe qu'à l'approche de la puissance maximale (plus précisément vers environ 3,4 à 3,6 kW) le moteur ralentit lorsque le courant appelé par la batterie augmente. Lorsque les batteries sont chargées le moteur ralentit pour fournir le courant d'entretien, ou s'éteint lorsque le courant appelé par les batteries est trop faible (en pratique cette situation se présente notamment lorsque le courant d'entretien (et possiblement une partie du courant de charge) est fourni par des panneaux photovoltaïques). Lorsque la batterie appelle un courant de charge, le moteur démarre automatiquement.

Dans une expérience similaire, on a testé l'autorégulation sur un banc d'essai qui ne comportait pas de batterie mais uniquement une charge variable. Le tableau ci-dessous indique les paramètres suivants qui ont été mesurés sur ce banc d'essai : la tension en sortie de l'alternateur (Uₐ [V]), le premier harmonique de cette tension (U¹a [V]), la fréquence en sortie de l'alternateur (f [Hz]), le courant dans la charge (Iₐ [A]), la tension aux bornes de la charge (Vₐ [V]) et la puissance délivrée par le système (P [W]).

| Uₐ [V] | U¹a [V] | f [Hz] | Iₐ [A] | Vₐ [V] | (P [W] |
|---|---|---|---|---|---|
| 262 | 258 | 335 | 0 | 145 | 0 |
| 261 | 258 | 335 | 1 | 146 | 438 |
| 261 | 256 | 335 | 1,95 | 146 | 854 |
| 256 | 254 | 334 | 2,9 | 145 | 1261 |
| 255 | 252 | 333 | 3,85 | 143 | 1652 |
| 253 | 250 | 334 | 4,8 | 143 | 2059 |
| 251 | 248 | 334 | 5,65 | 142 | 2407 |
| 249 | 247 | 334 | 6,3 | 141 | 2665 |
| 247 | 244 | 334 | 7,5 | 139 | 3218 |
| 244 | 241 | 334 | 8,15 | 137 | 3340 |
| 242 | 239 | 334 | 9 | 136 | 3672 |
| 222 | 220 | 301 | 9,3 | 125 | 3488 |
| 205 | 203 | 287 | 9,4 | 115 | 3243 |

La figure 3 montre les paramètres f (courbe 1), Uₐ (courbe 2) et P (courbe 3) en fonction du courant Iₐ tels qu'ils figurent dans le tableau. On remarque que la puissance délivrée par le système augmente avec le courant débitée (consommé par la charge). Lorsque ce courant dépasse une valeur prédéterminée, fixée par le dimensionnement (calibrage) des composants (notamment du moteur et de l'alternateur), la puissance fournie par le système diminue ; cela protège la batterie représentée (en partie) par la charge. On remarque également que la fréquence en sortie de l'alternateur reste constante jusqu'à ce point critique, puis elle diminue. Cela montre l'autorégulation du système.

### Exemple 2 :

Une borne autonome selon l'invention a été conçue, en utilisant la disposition des composants selon la figure 2. Le panneau photovoltaïque (9 m²) formait le toit de la borne, et ses dimensions (largeur et longueur) étaient supérieures à celles de la largeur et longueur du corps de la borne. Orienté correctement, il fournit sous plein soleil naturel environ 30% de la consommation journalière nécessaire à une antenne-relais de puissance 1200 W ; cela correspond à une économie significative de carburant.

## Revendications

1. Système ou dispositif autonome (1) pour fournir un courant continu à un consommateur, et notamment pour fournir un courant continu pour la charge régulée d'au moins une batterie (6), ledit système ou dispositif comprenant un moteur à combustion (2) alimenté par un combustible, un alternateur (3) et un moyen redresseur de courant (5) apte à produire un courant continu, **caractérisé en ce que** :
- ledit alternateur (3) est un alternateur synchrone (de préférence un alternateur triphasé) fonctionnant en fréquence variable (de préférence de type à aimants permanents, bipolaire ou multipolaire),
- ledit moteur à combustion (2) est accouplé audit alternateur (3),
- ledit moyen redresseur de courant (5) est placé en sortie dudit alternateur (3) et à l'entrée dudit consommateur, qui peut être une batterie (6),
- ledit moteur à combustion (2) et ledit alternateur (3) sont dimensionnés pour fournir une puissance telle que le courant continu issu dudit moyen redresseur (5) ne dépasse pas une valeur prédéterminée,
et **caractérisé en ce que**
- dans ledit système ou dispositif le courant continue appelé par le consommateur est autorégulé de manière à ce que ledit moteur à combustion (2) ne reçoit aucun signal de pilotage ni de contrôle externe qui puisse agir sur son alimentation en carburant ou sa vitesse de rotation, sauf éventuellement pour le démarrage dudit moteur à combustion (2) par un moyen de démarrage, tel qu'un démarreur électrique, et **en ce que**
- le moteur à combustion (2) dudit système ou dispositif autonome (1) est configuré et réglé pour fournir une puissance telle que le courant continu issu dudit moyen redresseur (5) ne dépasse pas une valeur prédéterminée qui est inférieure ou égale à la valeur maximale du courant de charge de la batterie (6) plus le courant continu absorbé par d'éventuels autres consommateurs mis en parallèle avec la batterie.

2. Système ou dispositif autonome (1) pour fournir un courant continu à un consommateur selon la revendication 1, **caractérisé en ce que** ledit moyen redresseur de courant (5) est un pont de diodes.

3. Système ou dispositif autonome (1) pour fournir un courant continu à un consommateur selon la revendication 1 ou 2, **caractérisé en ce qu'**il comprend en plus un convertisseur AC/AC (4) en sortie de l'alternateur (3).

4. Système ou dispositif autonome (1) pour fournir un courant continu à un consommateur selon l'une quelconque des revendications 1 à 3, **caractérisé en ce que** l'alternateur (3) est capable de produire en sortie trois courants alternatifs.

5. Système ou dispositif autonome (1) pour fournir un courant continu à un consommateur selon l'une quelconque des revendications 1 à 4, **caractérisé en ce qu'**un commutateur de transfert automatique (4) à deux seuils de tensions est placé entre l'alternateur (3) et le pont de diodes (5), de manière à pouvoir générer deux tensions différentes.

6. Système ou dispositif autonome (1) pour fournir un courant continu à un consommateur selon l'une quelconque des revendications 1 à 5, **caractérisé en ce que** le courant continu fourni à la batterie (6) a une tension compris entre 55 V et 61 V (de préférence entre 57 V et 59 V) en charge et entre 49 V et 55 V (de préférence entre 50 V et 54 V) en floating.

7. Système ou dispositif autonome (1) pour fournir un courant continu à un consommateur selon l'une quelconque des revendications 1 à 6, caractérisé en qu'il comprend en plus au moins une batterie (6) en tant que consommateur de courant continu, et possiblement au moins un autre consommateur de courant continu monté en parallèle avec ladite batterie (6).

8. Système ou dispositif autonome (1) pour fournir un courant continu à un consommateur selon l'une des revendications 1 à 7, **caractérisé en ce que** ledit consommateur est représenté par une batterie (6) mise en parallèle avec un système électronique d'émission / réception et/ou amplification d'ondes radioélectriques.

9. Système ou dispositif autonome (1) pour fournir un courant continu à un consommateur selon l'une quelconque des revendications 1 à 8, **caractérisé en ce que** ledit consommateur est une batterie (6) et **en ce qu'**il comprend en plus au moins un panneau photovoltaïque configuré pour charger ladite batterie (6).

10. Système ou dispositif selon l'une quelconque des revendications 1 à 9, **caractérisé en ce qu'**il est configuré de manière à ce que ledit moyen de démarrage soit déclenché par le dépassement vers le bas d'une valeur seuil de tension de ladite batterie.

11. Système ou dispositif selon l'une quelconque des revendications 1 à 10, **caractérisé en ce que** ledit moteur à combustion est un moteur diesel d'une puissance comprise entre 2 et 5 kW.

12. Utilisation d'un système ou dispositif autonome (1) pour fournir un courant continu à un consommateur selon l'une quelconque des revendications 1 à 11 comme alimentation électrique d'une antenne-relais (8), notamment pour téléphonie mobile.

13. Borne autonome (9) d'alimentation électrique d'une antenne-relais (8), comprenant un système ou dispositif autonome (1) pour la charge régulée de batteries selon l'une quelconque des revendications 1 à 11, au moins une batterie (6), un réservoir de combustible apte à alimenter ledit moteur à combustion (2), et optionnellement au moins un panneau photovoltaïque,
ladite borne se présentant de préférence avec une base formant colonne, rehaussée par un toit présentant une surface formée totalement ou partiellement par au moins un panneau photovoltaïque, et
ladite base comportant de préférence dans sa partie inférieure au moins une batterie (6), dans sa partie supérieure ledit réservoir de combustible, et entre les deux ledit système ou dispositif autonome (1).

## Patentansprüche

1. Autonome(s) System oder Vorrichtung (1) zum Liefern eines Gleichstroms an einen Verbraucher, und insbesondere zum Liefern eines Gleichstroms zum geregelten Aufladen von mindestens einer Batterie (6), wobei das System oder die Vorrichtung einen mit einem Brennstoff gespeisten Verbrennungsmotor (2), einen Generator (3) und ein Stromgleichrichtmittel (5) umfasst, welches in der Lage ist, einen Gleichstrom zu erzeugen, **dadurch gekennzeichnet, dass**:
- der Generator (3) ein Synchrongenerator (vorzugweise ein Drehstromgenerator) ist, der mit variabler Frequenz funktioniert (vorzugsweise vom Typ mit Dauer-, zweipoligen oder mehrpoligen Magneten),
- der Verbrennungsmotor (2) an den Generator (3) angekoppelt ist,
- das Stromgleichrichtmittel (5) am Ausgang des Generators (3) und am Eingang des Verbrauchers platziert ist, welcher eine Batterie (6) sein kann,
- der Verbrennungsmotor (2) und der Generator (3) so bemessen sind, dass sie eine derartige Leistung liefern, dass der aus dem Gleichrichtmittel (5) stammende Gleichstrom einen vorbestimmten Wert nicht übersteigt, und **dadurch gekennzeichnet, dass**
- in dem System oder der Vorrichtung der vom Verbraucher abgerufene Gleichstrom selbstregulierend ist, sodass der Verbrennungsmotor (2) weder ein externes Ansteuer- noch Steuerungssignal empfängt, das sich auf seine Kraftstoffspeisung oder seine Drehzahl auswirken kann, außer eventuell zum Anlassen des Verbrennungsmotors (2) über ein Anlassmittel, wie etwa einen elektrischen Anlasser, und dadurch, dass
- der Verbrennungsmotor (2) des autonomen Systems oder der Vorrichtung (1) so ausgebildet und geregelt ist, dass er eine derartige Leistung liefert, dass der aus dem Gleichrichtmittel (5) stammende Gleichstrom einen vorbestimmten Wert nicht übersteigt, welcher kleiner oder gleich dem Höchstwert des Ladestroms der Batterie (6) plus dem Gleichstrom ist, der von eventuellen anderen, zur Batterie parallel geschalteten Verbrauchern aufgenommen wird.

2. Autonome(s) System oder Vorrichtung (1) zum Liefern eines Gleichstroms an einen Verbraucher nach Anspruch 1, **dadurch gekennzeichnet, dass** das Stromgleichrichtmittel (5) eine Diodenbrücke ist.

3. Autonome(s) System oder Vorrichtung (1) zum Liefern eines Gleichstroms an einen Verbraucher nach Anspruch 1 oder 2, **dadurch gekennzeichnet, dass** es zusätzlich einen AC/AC-Wandler (4) am Ausgang des Generators (3) umfasst.

4. Autonome(s) System oder Vorrichtung (1) Liefern eines Gleichstroms an einen Verbraucher nach einem der Ansprüche 1 bis 3, **dadurch gekennzeichnet, dass** der Generator (3) in der Lage ist, drei Wechselströme am Ausgang zu erzeugen.

5. Autonome(s) System oder Vorrichtung (1) zum Liefern eines Gleichstroms an einen Verbraucher nach einem der Ansprüche 1 bis 4, **dadurch gekennzeichnet, dass** zwischen dem Generator (3) und der Diodenbrücke (5) ein automatischer Transferschalter (4) mit zwei Spannungsschwellen platziert ist, sodass zwei verschiedene Spannungen generiert werden können,

6. Autonome(s) System oder Vorrichtung (1) zum Liefern eines Gleichstroms an einen Verbraucher nach einem der Ansprüche 1 bis 5, **dadurch gekennzeichnet, dass** der an die Batterie (6) gelieferte Gleichstrom beim Laden eine Spannung im Bereich zwischen 55 V und 61 V (vorzugsweise zwischen 57 V und 59 V), und beim Schweben zwischen 49 V und 55 V (vorzugsweise zwischen 50 V und 54 V) aufweist.

7. Autonome(s) System oder Vorrichtung (1) zum Liefern eines Gleichstroms an einen Verbraucher nach einem der Ansprüche 1 bis 6, **dadurch gekennzeichnet, dass** es zusätzlich mindestens eine Batterie (6) als Gleichstromverbraucher umfasst, und gegebenenfalls mindestens einen weiteren Gleichstromverbraucher, der zur Batterie (6) parallel montiert ist.

8. Autonome(s) System oder Vorrichtung (1) zum Liefern eines Gleichstroms an einen Verbraucher nach einem der Ansprüche 1 bis 7, **dadurch gekennzeichnet, dass** der Verbraucher von einer Batterie (6) repräsentiert wird, die zu einem elektronischen Radiowellen-Sende-/Empfangs- und/oder Verstärkungssystem parallel gesetzt ist.

9. Autonome(s) System oder Vorrichtung (1) zum Liefern eines Gleichstroms an einen Verbraucher nach einem der Ansprüche 1 bis 8, **dadurch gekennzeichnet, dass** der Verbraucher eine Batterie (6) ist, und dadurch, dass er zusätzlich mindestens ein Photovoltaikpaneel umfasst, das dafür ausgebildet ist, die Batterie (6) aufzuladen.

10. System oder Vorrichtung nach einem der Ansprüche 1 bis 9, **dadurch gekennzeichnet, dass** es so ausgebildet ist, dass das Anlassmittel vom Unterschreiten eines Spannungsschwellenwerts der Batterie ausgelöst wird.

11. System oder Vorrichtung nach einem der Ansprüche 1 bis 10, **dadurch gekennzeichnet, dass** der Verbrennungsmotor ein Dieselmotor mit einer Leistung im Bereich zwischen 2 und 5 kW ist.

12. Verwendung eines/r autonomen Systems oder Vorrichtung (1) zum Liefern eines Gleichstrom an einen Verbraucher nach einem der Ansprüche 1 bis 11 als elektrische Speisung einer Relaisantenne (8), insbesondere für die Mobiltelefonie.

13. Autonomes Terminal (9) zur elektrischen Speisung einer Relaisantenne (8), umfassend ein autonome(s) System oder Vorrichtung (1) zum regulierten Aufladen von Batterien nach einem der Ansprüche 1 bis 11, mindestens eine Batterie (6), einen Brennstoffbehälter, der in der Lage ist, den Verbrennungsmotor (2) zu speisen, und gegebenenfalls mindestens ein Photovoltaikpaneel,
wobei sich das Terminal vorzugsweise mit einer Basis zeigt, die eine Säule bildet, überragt von einem Dach, welches eine vollständig oder teilweise von mindestens einem Photovoltaikpaneel gebildete Fläche aufweist, und wobei die Basis vorzugsweise in ihrem unteren Teil mindestens eine Batterie (6), in ihrem oberen Teil den Brennstoffbehälter, und zwischen den beiden das autonome System oder die Vorrichtung (1) umfasst.

## Claims

1. System or autonomous device (1) for providing a direct current to a consumer, and in particular for providing a direct current for the regulated charging of at least one battery (6), said system or device comprising a combustion engine (2) supplied with a fuel, an alternator (3) and a current-rectifier means (5) suitable for producing a direct current, **characterised in that**:
- said alternator (3) is a synchronous alternator (preferably a triphase alternator) operating at a variable frequency (preferably of the type having permanent magnets, bipolar or multipolar),
- said combustion engine (2) is coupled with said alternator (3),
- said current-rectifier means (5) is placed at the output of said alternator (3) and at the input of said consumer, which can be a battery (6),
- said combustion engine (2) and said alternator (3) are dimensioned to provide a power such that the direct current coming from said rectifier means (5) does not exceed a predetermined value,
and **characterised in that**
- in said system or device, the direct current demanded by the consumer is self-regulated in such a way that said combustion engine (2) does not receive any outside control signal that can act on its supply of fuel or its speed of rotation, except optionally for the starting of said combustion engine (2) via a starting means, such as an electric starter, and **in that**
- the combustion engine (2) of said system or autonomous device (1) is configured and adjusted to provide a power such that the direct current coming from said rectifier means (5) does not exceed a predetermined value that is less than or equal to the maximum value of the charging current of the battery (6) plus the direct current absorbed by optional other consumers placed in parallel with the battery.

2. System or autonomous device (1) for providing a direct current to a consumer according to claim 1, **characterised in that** said current-rectifier means (5) is a diode bridge.

3. System or autonomous device (1) for providing a direct current to a consumer according to claim 1 or 2, **characterised in that** it further comprises an AC/AC converter (4) at the output of the alternator (3).

4. System or autonomous device (1) providing a direct current to a consumer according to any one of claims 1 to 3, **characterised in that** the alternator (3) is capable of producing three alternating currents at the output.

5. System or autonomous device (1) for providing a direct current to a consumer according to any one of claims 1 to 4, **characterised in that** an automatic transfer switch (4) having two thresholds of voltages is placed between the alternator (3) and the diode bridge (5), in such a way as to be able to generate two different voltages.

6. System or autonomous device (1) for providing a direct current to a consumer according to any one of claims 1 to 5, **characterised in that** the direct current provided to the battery (6) has a voltage between 55V and 61V (preferably between 57V and 59V) when charging and between 49V and 55V (preferably between 50V and 54V) when floating.

7. System or autonomous device (1) for providing a direct current to a consumer according to any one of claims 1 to 6, **characterised in that** it further comprises at least one battery (6) as a consumer of direct current, and possibly at least one other consumer of direct current mounted in parallel with said battery (6).

8. System or autonomous device (1) for providing a direct current to a consumer according to any one of claims 1 to 7, **characterised in that** said consumer is represented by a battery (6) placed in parallel with an electronic system for emission/reception and/or amplification of radioelectric waves.

9. System or autonomous device (1) for providing a direct current to a consumer according to any one of claims 1 to 8, **characterised in that** said consumer is a battery (6) and **in that** it further comprises at least one photovoltaic panel configured to charge said battery (6).

10. System or device according to any one of claims 1 to 9, **characterised in that** it is configured in such a way that said starting means is activated when a voltage-threshold value of said battery is not reached.

11. System or device according to any one of claims 1 to 10, **characterised in that** said combustion engine is a diesel engine having a power between 2 and 5kW.

12. Use of a system or autonomous device (1) for providing a direct current to a consumer according to any one of claims 1 to 11 as the electric power supply of a relay antenna (8), in particular for mobile telephony.

13. Autonomous terminal (9) for supplying electric power to a relay antenna (8), comprising a system or autonomous device (1) for the regulated charging of batteries according to any one of claims 1 to 11, at least one battery (6), a fuel tank suitable for supplying said combustion engine (2), and optionally at least one photovoltaic panel,
said terminal preferably having a base forming a column, the height of which is increased by a roof having a surface totally or partially formed by at least one photovoltaic panel, and
said base preferably comprising at least one battery (6) in its lower portion, said fuel tank in its upper portion, and said system or autonomous device (1) between the two.
